# EUROPEAN PATENT SPECIFICATION

(11) **EP 4 420 333 B1**
(45) Date of publication and mention of the grant of the patent: **17.06.2026**
(21) Application number: 22817835.6
(22) Date of filing: 20.10.2022
(51) Int. Cl.: H04L 67/12, H04L 67/52, H04W 4/021, H04W 4/44, H04W 4/029

(54) **CONDITIONAL VEHICLE DATA ACCESS GRANTING TO THIRD PARTIES BASED ON GEOGRAPHIC INFORMATION OF RELATIVE POSITION BETWEEN VEHICLE AND THIRD PARTIES**
BEDINGTE FAHRZEUGDATENZUGRIFFSGEWÄHRUNG AN DRITTE AUF DER BASIS GEOGRAFISCHER INFORMATIONEN DER RELATIVEN POSITION ZWISCHEN DEM FAHRZEUG UND DEN DRITTEN
AUTORISATION D'ACCÈS CONDITIONNEL À DES DONNÉES DE VÉHICULE À DES TIERS SUR LA BASE D'INFORMATIONS GÉOGRAPHIQUES DE POSITION RELATIVE ENTRE UN VÉHICULE ET DES TIERS

(30) Priority: 21.10.2021 US 202163262862 P
(43) Date of publication of application: 28.08.2024
(73) Proprietor: Tesla, Inc., Austin, TX 78725 (US)
(72) Inventor: ZHANG, Theodore, Austin, Texas 78725 (US); DMYTRYK, Thomas, Austin, Texas 78725 (US); PENKE, Nalinichandra, Austin, Texas 78725 (US)
(74) Representative: Liesegang, Eva
(86) International application number: PCT/US2022/047270
(87) International publication number: WO 2023/069611

(56) References cited:
- US-A1- 2014 052 605
- US-A1- 2014 121 957
- US-A1- 2015 154 870
- US-A1- 2020 219 337

## Description

### BACKGROUND

The invention relates to providing vehicle data access to a third party service provider based on a vehicle location. Generally described, a variety of vehicles, such as electric vehicles, combustion engine vehicles, hybrid vehicles, etc., can be configured with user specific information or configuration information to facilitate operation. In certain scenarios, a third party, such as a service provider, may wish to access operation parameters, sensor values, or other information associated with a vehicle, such as to monitor or calculate vehicle performance parameters, user specific information, and the like. Vehicles can often include hardware and software functionality that facilitates location services or can access computing devices that provide location services. For example, a control component on a vehicle may be configured to determine an approximated location of the vehicle utilizing external information sources, such as global positioning system ("GPS") sources, Wireless Local Area Networks (WLAN) access point information sources, Bluetooth information sources, radio-frequency identification (RFID) sources, and location information available.

US 2015/154870 A1 discloses a navigation device serving as a position information transmission apparatus for transmitting position information about a vehicle to a position information service center includes a terminal ECU that is authorized to log in to the position information service center via networks. The terminal ECU is configured to, in a logged-in state to the position information service center, transmit the position information about the vehicle to the position information service center on condition that a predetermined operation has been performed.

US 2014/052605 A1 discloses a method that includes receiving, at a tracking server, geospatial location data of a vehicle at various points in time from a transmitter installed in the vehicle. The vehicle is associated with a borrower in a loan agreement or a lease agreement with a lending institution. The method also includes permitting a financial entity server associated with the lending institution access to the geospatial location data at the tracking server upon the vehicle exceeding one or more threshold parameter(s) related to the geospatial location data stored thereat and/or the borrower exceeding a threshold parameter related to the loan agreement or the lease agreement stored at the financial entity server.

Further prior art is disclosed in US 2014/121957 A1 and US 2020/219337 A1.

The invention is defined in the claims.

### BRIEF DESCRIPTION OF THE DRAWINGS

This disclosure is described herein with reference to drawings of certain embodiments, which are intended to illustrate, but not to limit, the present disclosure. It is to be understood that the accompanying drawings, which are incorporated in and constitute a part of this specification, are for the purpose of illustrating concepts disclosed herein and may not be to scale.
FIG. 1 depicts a block diagram of an illustrative environment for providing a vehicle data communication access based on geographic information in accordance with one or more aspects of the present application;
FIG. 2 depicts a block diagram which illustrates an environment that corresponds to vehicles in accordance with one or more aspects of the present application;
FIG. 3A depicts a block diagram which illustrates an architecture for implementing a processing component in accordance with aspects of the present application;
FIG. 3B depicts a block diagram which illustrates an architecture for implementing a vehicle data service in accordance with aspects of the present application;
FIG. 4A is data flow diagram of the illustrative environment of FIG. 1 according to an embodiment;
FIG. 4B is a data flow diagram of the illustrative environment of FIG. 1, including authentication of third-party service providers according to an embodiment;
FIG. 5 is a flow chart describing a routine for accessing vehicle data according to one or more embodiments as disclosed herein;
FIG. 6 is a flow chart describing a routine for authenticating third party service providers.

### DETAILED DESCRIPTION

Generally described, one or more aspects of the present disclosure relate to the configuration and management of data provided by vehicles to external sources. By way of illustrative example, aspects of the present application correspond to the management of data communications to provide vehicle data to one or more external sources based on geographic criteria. Illustratively, vehicle data can include but is not limited to, vehicle operational information, vehicle parameters, sensor configuration information, sensor values, environmental information, and the like. The geographic criteria are evaluated by one or more processing components within the vehicle (or associated with the vehicle) utilizing geographic location information determined by the vehicle. Accordingly, the vehicle, through the processing of geographic criteria, can determine the timing and extent of the transmission of vehicle data, such as within a defined geofence corresponding to a service provider.

In accordance with an illustrative embodiment, one or more aspects of the present disclosure relate to the configuration and accessibility of vehicle data communications provided to one or more external sources. The external sources can include a service technician or another third party. The vehicle can facilitate the verification of external sources. For example, the vehicle can be configured to verify whether the vehicle can transmit the vehicle data or whether the vehicle can allow external sources to access the vehicle data. The network service provider can facilitate an initial authentication of the external sources for access to vehicle data, provide access to the vehicle data for authenticated and authorized users, and manage the revocation of vehicle data access rights.

In some embodiments, the information provided by the components can include processed information in which a controller, logic unit, processor, and the like has processed sensor information and generated additional information, such as a vision system that can utilize inputs from one or more camera sensors and provide outputs corresponding to the identification of environmental conditions that promote the accumulation of objects/obstructions on the fascia (e.g., processing of raw camera image data and the generation of outputs corresponding to the processing of the raw camera image information). The camera sensor may be the sensor component that is associated with the heater element. In other embodiments, the camera sensors can be separate from the sensor components, such as for non-camera sensor components or vehicles having multiple camera sensors. In still another example, a control component can utilize additional information obtained from, or otherwise associated with, positioning systems, calendaring systems, or time-based systems. In still a further example, the historical information can be incorporated as a separate information source to the control component or be utilized to process at least some portion of the set of information sources, such as detected vehicle speed, external temperature measurements, and operational status of the windshield wiper, vision system (e.g., camera inputs), location systems (e.g., GPS systems), timing information, the operational status of the radar components, etc.

Generally, traditional approaches to data communication management between a vehicle and a third-party technician are defined according to the physical proximity between the vehicle and the technician. For example, a customer tenders a vehicle to a service center that provides the technician with physical access to the vehicle. In this regard, the granting of client authorization to a technician with regard to access to vehicle data or to provide data to the vehicle is inferred by the physical tender of the vehicle. This may result in a customer/client being required to provide physical access to the vehicle for longer periods of time as access to vehicle data does not occur until the physical tender of the vehicle. Additionally, typically a customer has no mechanism to define or otherwise limit the type of vehicle data that individual technicians or groups of technicians have access to or otherwise revoke access once the vehicle is tendered.

To address at least a portion of the above-identified inefficiencies, a network service provider can facilitate data communications between a vehicle and one or more external sources, such as third parties, generally referred to as technicians. The network service provider can authenticate the technicians in a manner that allows the technician to access vehicle data or interface with the vehicle via vehicle interfaces. Illustratively, the vehicle interfaces can correspond to a specific mode of operation, such as diagnostic mode or repair mode, that provides the technician with one or more interfaces. In other embodiments, the technician may still be to access at least some portion of the interfaces via other computing devices, such as laptops, tablets, mobile devices, etc., that may be in relative proximity to the vehicle (e.g., a short wireless connection).

The network service provider can also manage access to vehicle data for the technicians while preserving privacy information for the vehicle owners. More specifically, the network service provider can provide geographic criteria, such as geofencing information, to a vehicle. In turn, the vehicle can utilize local location services (e.g., a GPS component) to evaluate the geographic criteria for triggering vehicle data transfer to one or more third parties. In the context of services related to vehicle service, maintenance, etc., the vehicle can be configured to transmit vehicle data to a designated service center based on the vehicle's location, such as during transit to the designated service center, upon entry to the designated service, and the like. At the same time, the vehicle's location, path of travel and travel attributes (e.g., speed, etc.) is not necessarily provided to the designated service center.

In some embodiments, the vehicle may store the geofencing information according to the vehicle's location. For example, if the vehicle is located in an A city, geofencing information related to the A city, such as the geofencing information of one or more authorized vehicle service facilities located in the A city. In these embodiments, the geofencing information stored in the vehicle can be updated periodically. In some embodiments, when the vehicle moves to another geographical area, the geofencing information related to another geographical area can be automatically stored in the vehicle.

In some embodiments, the network service provider can implement an authenticating functionality to authenticate one or more external sources to provide authorization to the external sources. For example, the network service provider may authenticate a technician and provide authorized information to the vehicle. Illustratively, the network service provider may identify one or more attributes related to a technician, such as the technician's credentials. In this example, the network service provider may authenticate the technician by verifying the credential information and authorizing the technician to access to the vehicle data.

In some embodiments, a vehicle may include one or more electronic components positioned in or on a vehicle, where the electronic component is configured to communicate with the network service provider and the computing device. In some embodiments, the vehicle may include electronic components and storage to store the vehicle data. In these embodiments, any data generated from the vehicle can be stored in the storage. The data, for example, can include log data generated from sensors installed in the vehicle, any processed data related to the vehicle operation such as engine oil data, coolant temperature, milage, oxygen, knocking information from various sensors, etc. The data can also include diagnosed data and automated driving (e.g., self-driving) related data. In one embodiment, the data can be received from an external device.

Although the various aspects will be described in accordance with illustrative embodiments and a combination of features, one skilled in the relevant art will appreciate that the examples and combination of features are illustrative in nature and should not be construed as limiting. More specifically, aspects of the present application may be applicable to various types of vehicle data or vehicle processes. However, one skilled in the relevant art will appreciate that the aspects of the present application are not necessarily limited to application to any particular type of vehicle data, data communications or illustrative interaction between third parties, customers and a network service provider. Further, to facilitate the exchange of vehicle data and to provide for selected customization of data transmissions in an efficient manner, one or more aspects of the present application further correspond to illustrative data structure/organization in which vehicle information is transmitted in accordance with illustrative communication protocols. Such interactions should not be construed as limiting.

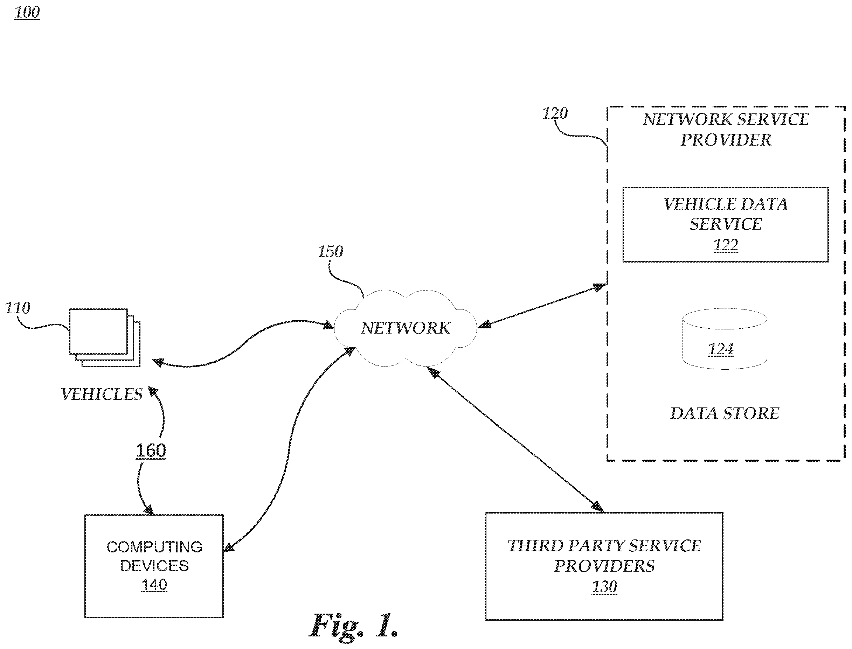

FIG. 1 depicts a block diagram of an illustrative environment of a system 100 for providing vehicle data communication access based on geographic information-based triggering actions. The system 100 can comprise a network, the network connecting a set of vehicles 110, a network service provider 120, one or more third party service providers 130, and one or more computing devices. The components may correspond to software modules implemented or executed by one or more external computing devices, which may be separate stand-alone external computing devices. Accordingly, the components of the network service provider 120 should be considered as a logical representation of the service, not requiring any specific implementation on one or more external computing devices.

Network 150, as depicted in FIG. 1, can connect the devices and modules of the system. The network can connect any number of devices. In some embodiments, the vehicles 110, the network service provider 120, the third-party service providers 130, and the computing devices 140 can communicate or exchange data via the network 150. In some embodiments, the network service provider 120 provides network-based services to the vehicles 110, the third-party service providers 130, and the computing devices 140 via the network 150. The network service provider 120 can implement network-based services and refers to a large, shared pool of network-accessible computing resources (such as compute, storage, or networking resources, applications, or services), which may be virtualized or bare-metal. The network service provider 120 can provide on-demand network access to a shared pool of configurable computing resources that can be programmatically provisioned and released in response to customer commands. These resources can be dynamically provisioned and reconfigured to adjust to the variable load. The concept of "cloud computing" or "network-based computing" can thus be considered as both the applications delivered as services over the network and the hardware and software in the network service provider that provide those services.

In some embodiments, the network 150 can be secured network, such as a local area network that communicates securely via the Internet with the network service provider 120. The network 150 may include any wired network, wireless network, or combination thereof. For example, the network 150 may be a personal area network, local area network, wide area network, over-the-air broadcast network (e.g., for radio or television), cable network, satellite network, cellular telephone network, or combination thereof. As a further example, the network 150 may be a publicly accessible network of linked networks, possibly operated by various distinct parties, such as the Internet. In some embodiments, the network 150 may be a private or semi-private network, such as a corporate or university intranet. The network 150 may include one or more wireless networks, such as a Global System for Mobile Communications (GSM) network, a Code Division Multiple Access (CDMA) network, a Long Term Evolution (LTE) network, a 5G (5 generation wireless communication), or any other type of wireless network. The network 150 can use protocols and components for communicating via the Internet or any of the other aforementioned types of networks. For example, the protocols used by the network 150 may include Hypertext Transfer Protocol (HTTP), HTTP Secure (HTTPS), Message Queue Telemetry Transport (MQTT), Constrained Application Protocol (CoAP), and the like. Protocols and components for communicating via the Internet or any of the other aforementioned types of communication networks are well known to those skilled in the art and, thus, are not described in more detail herein.

In some embodiments, the vehicles 110 and the computing devices 140 can be connected via a network 160. In these embodiments, the network 160 comprises any combination of wired and/or wireless networks, such as one or more direct communication channels, local area network, wide area network, personal area network, and/or the Internet, for example. In some embodiments, the communication between the vehicles 110 and the computing devices 140 may be performed via a short-range communication protocol, such as Bluetooth, Bluetooth low energy ("BLE"), and/or near field communications ("NFC"). In some embodiments, the network 160 can be utilized as a backup network of the network 150. For example, when a technician access one of the vehicles 110 via the network 150 and that the connection of the network 150 is disrupted or severed, the vehicles 110 and the computing devices 140 can communicate via the network 160.

In some embodiments, the networks 150, 160 may include some or all of the same communication protocols, services, hardware, etc. Thus, although the discussion herein may describe communication between the vehicles 110 and the computing devices 140 via the network 160 and communication between the vehicles 110, the network service provider 120, the third-party service providers 130, and the computing devices 140 can occur via the network 150, communications of the devices and/or the network bases services are not limited in this manner. The various communication protocols discussed herein are merely examples, and the present application is not limited thereto.

Illustratively, the set of vehicles 110 correspond to one or more vehicles configured with data storage for storing data generated from electrical components in the vehicle 110. The data, for example, can include log data generated from sensors installed in the vehicle, any processed data related to the vehicle operation such as engine oil data, coolant temperature, milage, oxygen, knocking information from various sensors, etc. The data can also include diagnosed data, an automated driving (e.g., self-driving) related data. In one embodiment, the data can be received from an external device.

In some embodiments, the vehicles 110 include communication functionality, including hardware and software, that facilitate interaction via one of a plurality of communication mediums and communication protocols. More specifically, the vehicles include a plurality of sensors, components, and data stores for obtaining, generating and maintaining vehicle data, including operational data. In some embodiments, the information provided by the components can include processed information in which a controller, logic unit, processor, and the like has processed sensor information and generated additional information, such as a vision system that can utilize inputs from one or more camera sensors and provide outputs corresponding to the identification of environmental conditions (e.g., processing of raw camera image data and the generation of outputs corresponding to the processing of the raw camera image information). The camera sensor may be the sensor component that is associated with vision systems for determining vehicle operational status, environmental status or other information.

Illustratively, the network service provider 120 can include a vehicle data service 122 that can provide functionality responsive to data received from the vehicle or authenticating technicians as applied to aspects of the present application. The network service provider 120 can include one or more data stores 124 for storing vehicle diagnostic results associated with aspects of the present application. The vehicle data service 122 and data store 124 in FIG. 1 are logical in nature and can be implemented in the network service provider 120 in a variety of manners.

Illustratively, the computing device 140, as depicted in FIG. 1, can be any computing device such as a desktop, laptop, personal computer, tablet computer, wearable computer, server, personal digital assistant (PDA), hybrid PDA/mobile phone, mobile phone, smartphone, set-top box, voice command device, digital media player, and the like. The computing device 140 may execute an application (e.g., a browser, a stand-alone application, etc.) that allows a user to access interactive user interfaces, view images, analyses, aggregated data, and/or the like as described herein. In some embodiments, technicians can utilize the computing device 140 to authenticate the technician's credentials to access to the vehicle 110 and/or to access to the vehicle data.

The system 100 can further include one or more third party service providers 130 that can include any one of a number of services/entities that may be configured to either provide inputs to the network service provider 120 or receive processing results based on process data, such as vehicle data communication configuration information and/or the vehicle data management information. The third-party services 130 can also include entities that can utilize the vehicle data, such as a third party authorized vehicle service facility, a technician, a vehicle data administrator, a vehicle management authority, etc.

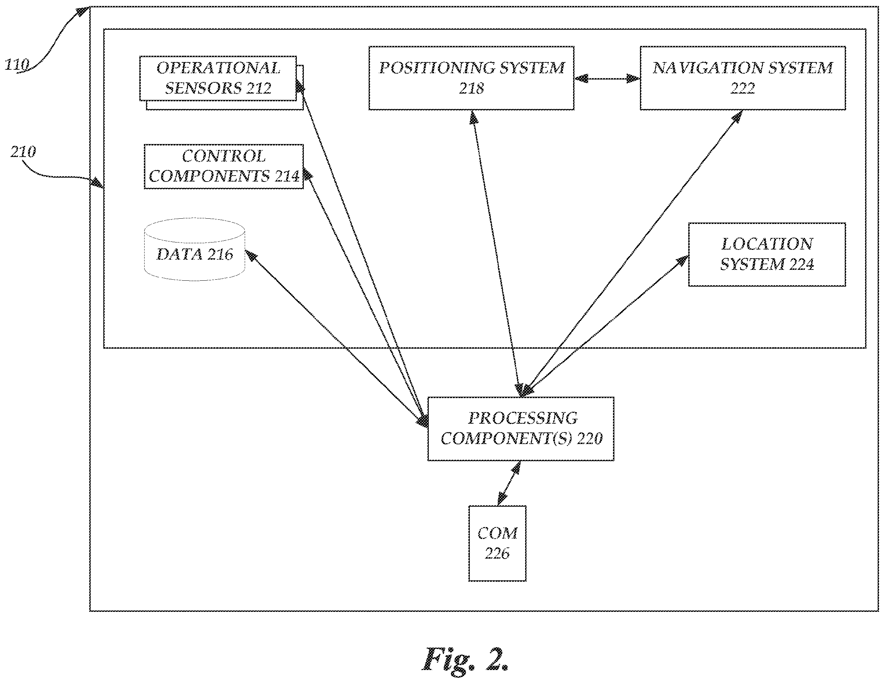

For purposes of illustration, FIG. 2 illustrates an environment that corresponds to vehicles 110 in accordance with one or more aspects of the present application. The environment includes a collection of inputs from local sensors 210 that can provide inputs for the operation of the vehicle or collection of information as described herein. The collection of local sensors 210 can include one or more sensor or sensor-based systems included with a vehicle or otherwise accessible by a vehicle during operation. The local sensors or sensor systems may be integrated into the vehicle. Alternatively, the local sensors or sensor systems may be provided by interfaces associated with a vehicle, such as physical connections, wireless connections, or a combination thereof.

In one aspect, the local sensors 210 can include vision systems that provide inputs to the vehicle, such as detection of objects, attributes of detected objects (e.g., position, velocity, acceleration), presence of environment conditions (e.g., snow, rain, ice, fog, smoke, etc.), and the like. For example, the vehicle 110 may include a plurality of cameras, operational sensors 212, control components 214, and data 216. In this example, the operational sensors 212 may provide the vehicle operational parameters to processing component 220 in real time. The control components 214 may provide data related to controlling the vehicle, such as steering wheel direction, acceleration, braking, etc. The data 216 may provide any stored information related to the current vehicle operational environment, such that if the vehicle 110 is driving on a highway, the data 216 may provide driving information, including speed limit of the highway, number of traffic lines, etc. The types of data 216 are not limited in this disclosure, and the types of data can be any data that can be utilized in autonomous driving by utilizing the vision system. In some embodiments, vehicles 110 can rely on such vision systems for defined vehicle operational functions including capturing visual positioning information or positioning cues in accordance with aspects of the present application.

In yet another aspect, the local sensors 210 can include one or more positioning systems 218 that can obtain reference information from external sources that allow for various levels of accuracy in determining positioning information for a vehicle. For example, the positioning systems 218 can include various hardware and software components for processing information from GPS sources, Wireless Local Area Networks (WLAN) access point information sources, Bluetooth information sources, radio-frequency identification (RFID) sources, and the like. In some embodiments, the positioning systems can obtain combinations of information from multiple sources. Illustratively, the positioning systems 218 can obtain information from various input sources and determine positioning information for a vehicle, specifically elevation at a current location. In other embodiments, the positioning systems can also determine travel-related operational parameters, such as the direction of travel, velocity, acceleration, and the like. The positioning system 218 may be configured as part of a vehicle for multiple purposes, including self-driving applications, enhanced driving or user-assisted navigation, and the like. Illustratively, the positioning systems can include processing components and data that facilitate the identification of various vehicle parameters or process information.

In still another aspect, the local sensors can include one or more navigations system 222 for identifying navigation related information. Illustratively, the navigation systems 222 can obtain positioning information from positioning systems 218 and identify characteristics or information about the identified location, such as elevation, road grade, etc. The navigation systems 218 can also identify suggested or intended lane locations in a multi-lane road based on directions that are being provided or anticipated for a vehicle user. Similar to the location systems 224, the navigation system may be configured as part of a vehicle for multiple purposes, including self-driving applications, enhanced driving or user-assisted navigation, and the like. The navigation systems 222 may be combined or integrated with positioning systems 218. Illustratively, the positioning systems 218 can include processing components and data that facilitate the identification of various vehicle parameters or process information.

The local resources further include one or more processing component(s) 220 that may be hosted on the vehicle or a computing device accessible by a vehicle (e.g., a mobile computing device). The processing component(s) 220 can illustratively access inputs from various local sensors or sensor systems and process the inputted data and store the processed data. For purposes of the present application, the processing component(s) 220 will be described with regard to one or more functions related to illustrative aspects. For example, processing component(s) in the vehicle 110 will verify authorized entities or individuals who can access the vehicle data and collect and transmit the data set corresponding to the request from the authorized entities and/or technicians. The processing component(s) 220 may communicate with other vehicle components and the authorized entities and/or technicians via com 226. For example, the com 226 may provide the verification information or vehicle data by utilizing vehicle communication buses or one or more vehicle interfaces configured to utilize the networks 150, 160.

The environment can further include various additional sensor components or sensing systems operable to provide information regarding various operational parameters for use in accordance with one or more of the operational states. The environment can further include one or more control components for processing outputs, such as the transmission of data through a communications output, the generation of data in memory, the transmission of outputs to other processing components, and the like.

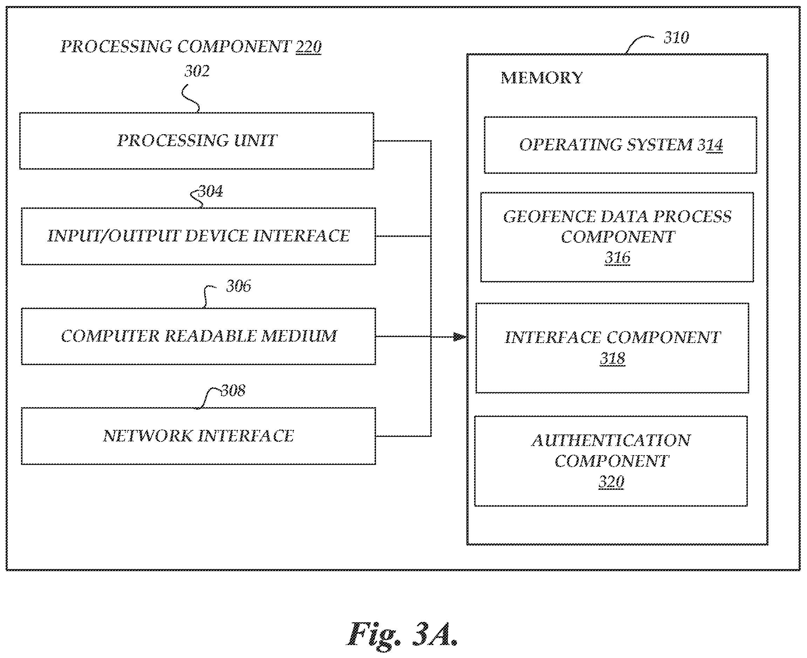

With reference now to FIG. 3A, an illustrative architecture for implementing the processing component 220 on vehicle 110 will be described. The processing component 220 may be part of components/systems that can provide functionality associated with processing and storing vehicle data and providing access to the stored data for a technician by receiving the technician's authorized information.

The architecture of FIG. 3A is illustrative in nature and should not be construed as requiring any specific hardware or software configuration for the processing component 220. The general architecture of the processing component 220 is depicted in FIG. 3A includes an arrangement of computer hardware and software components that may be used to implement aspects of the present disclosure. As illustrated, the processing component 220 includes a processing unit 302, a network interface 308, a computer readable medium drive 306, and an input/output device interface 304, all of which may communicate with one another by way of a communication bus. The components of the processing component 220 may be physical hardware components that can include one or more circuitries and software models.

The network interface 308 may provide connectivity to one or more networks or computing systems, such as the networks 150, 160 of FIG. 1. The processing unit 302 may thus receive information and instructions from other computing systems or services via a network. The processing unit 302 may also communicate to and from memory 310 and further provide output information via the input/output device interface. In some embodiments, the processing component 220may include more (or fewer) components than those shown in FIG. 3A.

The memory 310 may include computer program instructions that the processing unit 302 executes in order to implement one or more embodiments. The memory 310 generally includes RAM, ROM, or other persistent or non-transitory memory. The memory 310 may store an operating system 314 that provides computer program instructions for use by the processing unit 302 in the general administration and operation of the processing component 220. The memory 310 may further include computer program instructions and other information for implementing aspects of the present disclosure.

The memory 310 may include a geofence data process component 316. The geofence data process component 316 can be configured to verify that the vehicle 110 is entered within the geofence region (e.g., geographic region), where third party service provides, such as authorized service centers, and/or technicians, can access the vehicle data. In some embodiments, the geofence data process component 316 receives geographic criteria from the vehicle data service 122. In some embodiments, the geofence data process component 316 automatically receives the geographic criteria, such as upon confirmation of a service appointment with the vehicle or detection of entering into a geofence region (e.g., geographic region). In some embodiments, the geofence data process component 316 may receive the geographic criteria from a plurality of third parties that are authorized by the vehicle data service 122.

Illustratively, the geographic criteria can be in the form computer-executable data, such as executable scripts, that at least a trigger based on geographic boundary information. The trigger can be based on a determination that a vehicle's location falls within the defined geographic boundary information (e.g., entering into a geofence) or a vehicle's location no longer falls within the defined geographic boundary information (e.g., leaving a geofence). The geographic criteria can illustratively include a specification of one or more specific vehicle data information or types of vehicle data that should be transmitted by on satisfaction of the triggering action. Still, further, the geographic criteria can further include additional or supplemental criteria that can define filtering criteria for the vehicle data, timing data for the transmission of the vehicle data, and the like. The geographic criteria can further incorporate or be supplemented with user profile information that may specify additional parameters related to the transmission of vehicle data, such as data formatting preferences, customization information, prohibited information, and the like.

In some embodiments, the geofence data process component 316 can access location information utilizing local location-based service components, such as the GPS components (positioning system 218 and/or location system 224) that are part of the vehicle or otherwise accessing location services, such as via a mobile device. In some embodiments, the geofence data process component 316 processes the geographic criteria to determine whether a current location matches one or more the geographic criteria. As discussed above, this can include a determination of whether the determined location falls within a geofence or no longer falls within a geofence. The matching of the geofencing information illustratively can be characterized as satisfying a triggering action.

In some embodiments, if the processed location information indicates a triggering action has occurred, the geofence data process component 316 can then select the vehicle data that will be transmitted to the third-party service providers and/or technicians. As described above, the geographic criteria can, in some embodiments, specify the particular data or data types that will be transmitted to the third party. For example, the selected data can correspond to the type of service to be provided, user preference, service provider preferences and the like. For example, the vehicle data can include software versioning information, diagnostic logs, sensor values, user information, language preferences, and the like.

In still further embodiments, the triggering actions can further include a request for information to be provided by the third-party service providers and/or technicians, such as software updates, specific codes or encryption keys utilized by the third party, and the like. Accordingly, the transmission of vehicle data in some embodiments can include transmission of data from the vehicle to the third-party service providers and/or technicians, transmission of data from the third party service providers to the vehicle, or a combination thereof.

In some embodiments, the geofence data process component 316 is configured to verify the vehicle's location within the geofence region. For example, when the GPS components (positioning system 218 and/or location system 224) indicates that the vehicle is within the geofence region, the geofence data process component 316 may further verify the accuracy of the location by utilizing Wireless Local Area Networks (WLAN) access point information sources, Bluetooth information sources, radio-frequency identification (RFID) sources, and/or the like.

The memory 310 further includes the interface component 318. The interface component 318 can provide various interfaces to allow the authorized third service providers and/or technicians to access to the vehicle data, executable code, or configurations that facilitate diagnostics or repair. In some embodiments, access to the vehicle data or data communications is set up as a set of common interfaces that do not require custom computing devices or hardware for the technicians. In one embodiment, the interfaces can correspond to vehicle network information that provides access to the values/status of sensors or components or data collected from the sensors/components of the vehicles. In some embodiments, the sensors can include hardware and software components that can obtain, generate or process a variety of operational or environmental information sources that are configured in the vehicle for various purposes. In some embodiments, the sensors can provide raw, collected data to the control component as well as other controls for different functionality. By way of illustration, the information provided to control components by the sensors, controller components, or other processing units can be associated with the operation of the vehicle, such as detected vehicle speed, external temperature measurements, and operational status of the windshield wiper, vision system (e.g., camera inputs), location systems (e.g., GPS systems), timing information, operational status of the components, etc.

The memory 310 can further include an authentication component 320. In some embodiments, the authentication component 320 requests the third-party service providers and/or technicians' authorized information. In these embodiments, the authentication component 320 may provide the third-party service providers and/or technician's authentication information via the network 150. In some embodiments, the third-party service providers and/or technician will have authentication credentials provided to the network service provider and, in turn, can receive a token or other semi-persistent information indicating authentication of the technician to access the vehicle 110. In these embodiments, the third-party service providers and/or technician may provide the authenticated token or other semi-persistent information to the authentication component via the networks 150 or 160. After receiving the technician's authorized information, the authentication component 320 may provide the third-party service providers and/or technician access to the vehicle data.

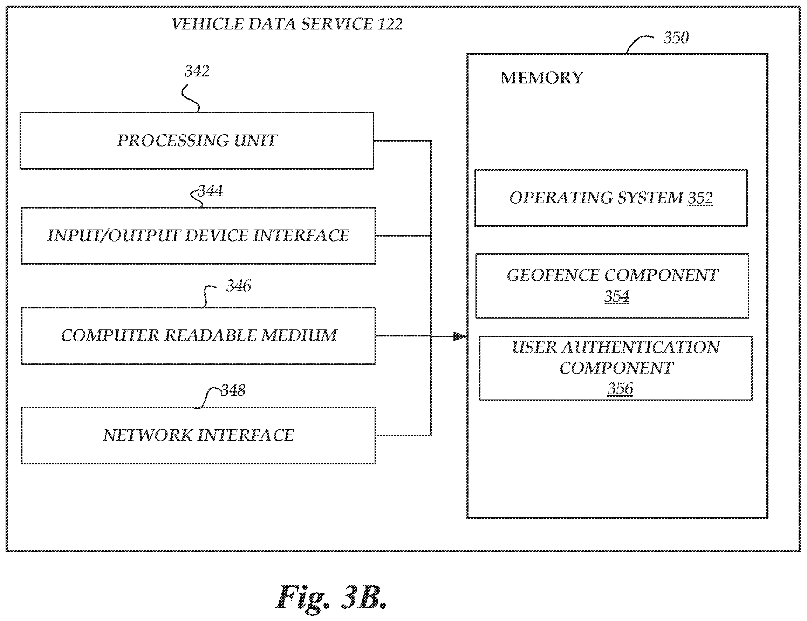

With reference now to FIG. 3B, an illustrative architecture for implementing the vehicle data service 122 on a network service provider 120 will be described. The vehicle data service 122 may be part of components/systems that can provide functionality associated with the third-party service providers and/or technicians to authenticate the third party service providers and/or technicians' authentication information and provide an authorized information to the third party service providers and/or technicians.

The architecture of FIG. 3B is illustrative in nature and should not be construed as requiring any specific hardware or software configuration for the vehicle data service 122. The general architecture of the vehicle data service 122 is depicted in FIG. 3B includes an arrangement of computer hardware and software components that may be used to implement aspects of the present disclosure. As illustrated, the vehicle data service 122 includes a processing unit 342, a network interface 348, a computer readable medium drive 346, and an input/output device interface 344, all of which may communicate with one another by way of a communication bus. The components of the vehicle data service 122 may be physical hardware components that can include one or more circuitries and software models.

The network interface 348 may provide connectivity to one or more networks or computing systems, such as the networks 150, 160 of FIG. 1. The computing device 140 may thus receive information and instructions from other computing systems or services via a network. The vehicle data service 122 may also communicate to and from memory 350 and further provide output information via the input/output device interface. In some embodiments, the vehicle data service 122 may include more (or fewer) components than those shown in FIG. 3B.

The memory 350 may include computer program instructions that the processing unit 342 executes in order to implement one or more embodiments. The memory 350 generally includes RAM, ROM, or other persistent or non-transitory memory. The memory 350 may store an operating system 352 that provides computer program instructions for use by the processing unit 342 in the general administration and operation of the vehicle data service 122.

The memory 350 may further include a geofence component 354. The geofence component 354 may include the geographic criteria that can determine whether the vehicle is entered within the geofence region, where the vehicle is configured to provide at least part of the vehicle data to the authorized third-party service providers and/or technicians. For example, the geofence component 354 automatically transmits the geographic criteria, such as upon confirmation of a service appointment with the vehicle or detection of entering into a geofence region (e.g., geographic region). In some embodiments, the geographic criteria can be in the form computer-executable data, such as executable scripts, that at least a trigger based on geographic boundary information. The trigger can be based on a determination that a vehicle's location falls within the defined geographic boundary information (e.g., entering into a defined geofence) or a vehicle's location no longer falls within the defined geographic boundary information (e.g., leaving a geofence). The geographic criteria can illustratively include a specification of one or more specific vehicle data information or types of vehicle data that should be transmitted by on satisfaction of the triggering action. Still, further, the geographic criteria can further include additional or supplemental criteria that can define filtering criteria for the vehicle data, timing data for the transmission of the vehicle data, and the like. The geographic criteria can further incorporate or be supplemented with user profile information that may specify additional parameters related to the transmission of vehicle data, such as data formatting preferences, customization information, prohibited information, and the like. The geographic criteria can be periodically updated.

The memory 350 may further include a user authentication component 356 for authenticating the user. The user can be authorized technicians and/or one or more technicians in the authorized third-party service providers. In some embodiments, the user authentication component 356 may include lists of authorized technicians and/or technicians in the authorized third-party service providers associated with one or more geofence regions. For example, all of the technicians in the third-party service provider A are associated with the geofence region of the third-party service provider A. In this example, when a vehicle enters into the geofence region of the third-party service provider A, the authorized technicians associated with the third-party service provider A are authorized to access the vehicle data. In some embodiments, the user authentication component 356 provides one or more criteria to authorize the technicians and terminate the authentication of the technicians. For example, the criteria can be based on the physical location of the technicians. In this example, when a vehicle enters into the geofence area associated with the third-party service provider A, only technicians located in a specific area, such as the service facility of the third-party service provider A can have access to the vehicle data. In another example, when technicians in the third-party service provider A leaves the third-party service provider A facility, the technicians' authentication is terminated. The criteria can be further based on types of services, such that only technicians who are specialized in the requested services from the vehicle owner (e.g., user) can be authenticated. These criteria are provided merely for exemplify purposes, and the present disclosure does not limit the types or numbers of the criteria.

In some embodiments, the user authentication component 356 authenticates the third-party service providers and/or technicians' authentication information (e.g., credential information). In these embodiments, the user authentication component 356 receives the third-party service providers and/or technicians' authorized information, such as tokens, to ensure that the authentication rights permit access to the requested vehicle and vehicle data access type. For example, the user authentication component 356 can verify that the technician has a valid subscription and that the subscription/qualifications of the technician. For example, the user authentication component 356 can verify that the requesting technician has sufficient credentials to provide the requested service to the vehicle. In another example, the user authentication component 356 can also determine whether the requested service/access by the technician corresponds to a type of service that should be performed on the vehicle and whether the requested service is not duplicative or redundant. In still a further example, the user authentication component 356 can also determine whether the requested service is characteristic of a pattern of behavior for the identified technician (e.g., service associated with different vehicles) that can be characterized as appropriate, potentially harmful, requiring verification from the customer or the like. The user authentication component 356 can also verify aspects of the requested vehicle, the devices utilized by the technician, the like.

In some embodiments, the user authentication component 356 transmits a notification or command to the vehicle 110, indicating that data access communications have been approved. The user authentication component 356 can also provide notification or credentials to the technician that allow access to the vehicle data. The notifications may be provided via various communication channels, including email, short message service, mobile application, in-vehicle, and the like. In some embodiments, the data access authorizations may also be associated with additional authorization parameters including, but not limited to, duration of access, types of data accessed, revoking criteria (e.g., criteria that will result in an automatic revoking of rights), customer notification parameters, and the like. In some embodiments, the geofence component 354 can be configured with a customer profile that may specify default values for the authorization parameters. In other examples, the customer may be prompted to provide additional data access parameters.

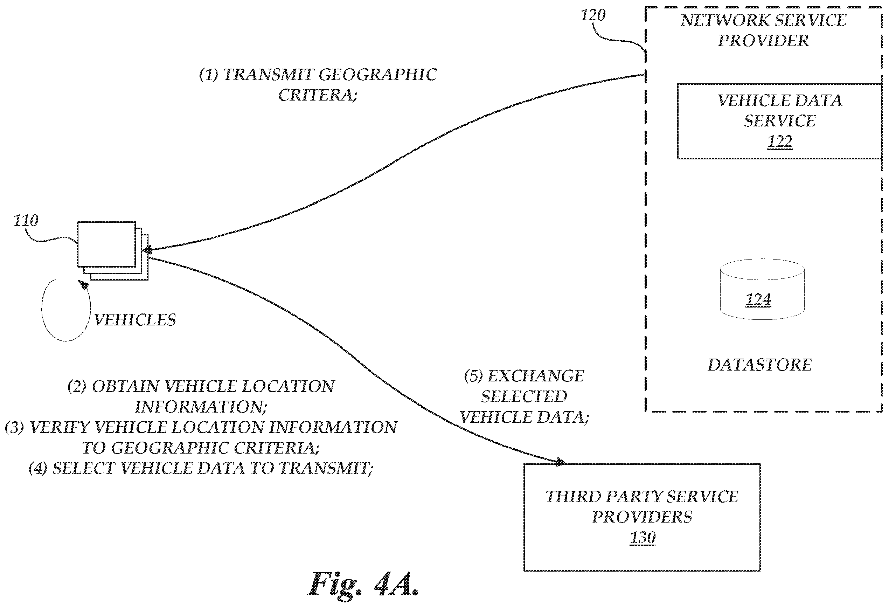

With reference now to FIG. 4A, an illustrative interaction between the network service, an individual third party, and an individual vehicle will be described. Although only a single interaction is illustrated, the present application is not limited to a single interaction. Rather, individual iterations of the illustrated interaction can result in different exchanges of vehicle information based on the configuration of the selected vehicle, different vehicle data requests, monitoring or diagnostic applications being performed by the network service, and the like.

At (1), the network service transmits geographic criteria to the vehicle. Illustratively, the network service can transmit the geographic criteria to the vehicle based on a request from a user associated with the vehicle, such as placing a service request with a third party or transmitting the request directly to the network service. In other embodiments, the third-party service may prompt the network service to transmit geographic criteria to the vehicle, such as upon confirmation of a service appointment with the vehicle. In other embodiments, the network service provider can transmit geographic criteria for a plurality of third parties independent of a request or scheduled service. Additionally, a vehicle may be provided geographic criteria, such as upon detection of entering into a geographic region (e.g., city limits or regional limits).

Illustratively, the geographic criteria can be in the form computer-executable data, such as executable scripts, that at least a trigger based on geographic boundary information. The trigger can be based on a determination that a vehicle's location falls within the defined geographic boundary information (e.g., entering into a geofence) or a vehicle's location no longer falls within the defined geographic boundary information (e.g., leaving a geofence). The geographic criteria can illustratively include a specification of one or more specific vehicle data information or types of vehicle data that should be transmitted by the satisfaction of the triggering action. Still, further, the geographic criteria can further include additional or supplemental criteria that can define filtering criteria for the vehicle data, timing data for the transmission of the vehicle data, and the like. For example, the additional or supplemental criteria can include information that temporarily suspends the transmission of data or otherwise keeps the vehicle in a present state if the vehicle temporarily leaves the geofence (e.g., a test drive). The geographic criteria can further incorporate or be supplemented with user profile information that may specify additional parameters related to vehicle data transmissions, such as data formatting preferences, customization information, prohibited information, and the like.

At (2), the vehicle can obtain the vehicle location information by accessing location information utilizing local location-based service components, such as GPS components that are part of the vehicle, or otherwise accessing location services, such as via a mobile device (e.g., positioning system 218 and/or location system 224). At (3), the vehicle verifies the vehicle location information to the geographic criteria. For example, a processing component 220 within the vehicle may process the geographic criteria to determine whether a current location matches one or more geographic criteria. As discussed above, this can include a determination of whether the determined location falls within a geofence or no longer falls within a geofence. Illustratively matching the geofencing information can be characterized as satisfying a triggering action. In some embodiments, the vehicle may verify the vehicle's location within the geofence region. For example, when the GPS components (positioning system 218 and/or location system 224) indicate that the vehicle is within the geofence region, the geofence data process component 316 may further verify the accuracy of the location by utilizing Wireless Local Area Networks (WLAN) access point information sources, Bluetooth information sources, radio-frequency identification (RFID) sources, and/or the like.

At (4), if the processed location information indicates a triggering action has occurred, the vehicle 110 can then select the vehicle data that will be transmitted to the third party service. As described above, the geographic criteria can, in some embodiments, specify the particular data or data types that will be transmitted to the third party. For example, the selected data can correspond to the type of service to be provided, user preference, service provider preferences, and the like. For example, the vehicle data can include software versioning information, diagnostic logs, sensor values, user information, language preferences, and the like.

In still further embodiments, the triggering actions can further include a request for information to be provided by the third party, such as software updates, specific codes or encryption keys utilized by the third party, and the like. Accordingly, the transmission of vehicle data in some embodiments can include the transmission of data from the vehicle to the third party, the transmission of data from the third party to the vehicle, or a combination thereof.

At (5), the vehicle 110 and third party service providers exchange the selected data. The transmission of data may be selected according to any number of communication methods and protocols. For example, the vehicle establishes a communication channel via short range wireless frequency transmissions based on geographic criteria proximate to a designated service provider. In other embodiments, the vehicle can encrypt, compression or otherwise process the transmissions between the service provider and the vehicle.

In some embodiments, the vehicle 110 exchanges the vehicle data with authorized third-party service providers. In these embodiments, the vehicle data service 122 may include lists of authorized technicians and/or technicians in the authorized third-party service providers associated with one or more geofence regions. For example, all of the technicians in the third-party service provider A are associated with the geofence region of the third-party service provider A. In this example, when a vehicle enters into the geofence region of the third-party service provider A, the authorized technicians associated with the third party service provider A are authorized to access the vehicle data. In some embodiments, the vehicle data service 122 provides one or more criteria to authorize the technicians and terminate the authentication of the technicians. For example, the criteria can be based on the physical location of the technicians. In this example, when a vehicle enters into the geofence area associated with the third-party service provider A, only technicians located in a specific area, such as the service facility of the third party service provider A can have access to the vehicle data. In another example, when technicians in the third party service provider A leave the third party service provider A's facility (e.g., leaves a geofence region associated with the third party service provider A's facility), the technicians' authentication is terminated. The criteria can be further based on types of services, such that only technicians who are specialized in the requested services from the vehicle owner (e.g., user) can be authenticated. These criteria are provided merely for exemplify purposes, and the present disclosure does not limit the types or numbers of the criteria.

In some embodiments, the network 160 can be utilized as a backup network for the network 150. For example, when a technician accesses one of the vehicles 110 via the network 150 and that the connection of the network 150 is disrupted or severed, the vehicles 110 and computing devices 140 can communicate via the network 160.

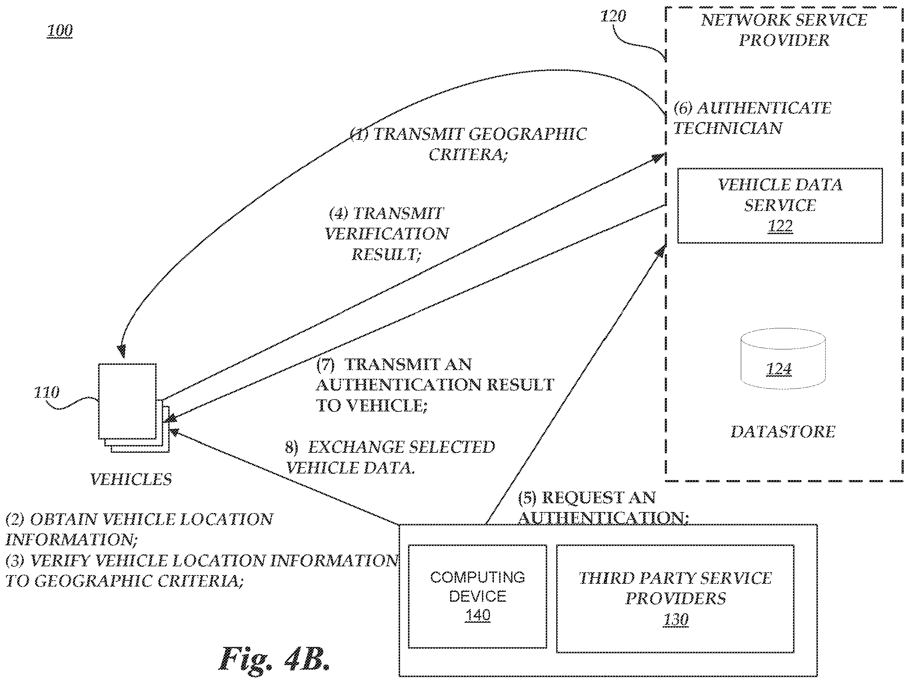

With reference now to FIG. 4B, an illustrative interaction between the network service, an individual third party, and an individual vehicle will be described according to one embodiment. Although only a single interaction is illustrated, the present application is not limited to a single interaction. Rather, individual iterations of the illustrated interaction can result in different exchanges of vehicle information based on the configuration of the selected vehicle, different vehicle data requests, monitoring or diagnostic applications being performed by the network service, and the like.

At (1), the network service transmits geographic criteria to the vehicle. Illustratively, the network service can transmit the geographic criteria to the vehicle based on a request from a user associated with the vehicle, such as placing a service request with a third party or transmitting the request directly to the network service. In other embodiments, the third party service may prompt the network service to transmit geographic criteria to the vehicle, such as upon confirmation of a service appointment with the vehicle. In other embodiments, the network service provider can transmit geographic criteria for a plurality of third parties independent of a request or scheduled service. Additionally, a vehicle may be provided geographic criteria, such as upon detection of entering into a geographic region (e.g., city limits or regional limits).

Illustratively, the geographic criteria can be in the form computer-executable data, such as executable scripts, that at least a trigger based on geographic boundary information. The trigger can be based on a determination that a vehicle's location falls within the defined geographic boundary information (e.g., entering into a geofence) or a vehicle's location no longer falls within the defined geographic boundary information (e.g., leaving a geofence). The geographic criteria can illustratively include a specification of one or more specific vehicle data information or types of vehicle data that should be transmitted by on satisfaction of the triggering action. Still, the geographic criteria can include additional or supplemental criteria that can define filtering criteria for the vehicle data, timing data for the transmission of the vehicle data, and the like. The geographic criteria can further incorporate or be supplemented with user profile information that may specify additional parameters related to vehicle data transmission, such as data formatting preferences, customization information, prohibited information, and the like.

At (2), the vehicle can obtain the vehicle location information by accessing location information utilizing local location based service components, such as GPS components that are part of the vehicle or otherwise accessing location services, such as via a mobile device (e.g., positioning system 218 and/or location system 224). At (3), the vehicle verifies the vehicle location information to the geographic criteria. For example, a processing component 220 within the vehicle may process the geographic criteria to determine whether a current location matches one or more geographic criteria. As discussed above, this can include a determination of whether the determined location falls within a geofence or no longer falls within a geofence. Illustratively matching the geofencing information can be characterized as satisfying a triggering action. In some embodiments, the vehicle may verify the vehicle's location within the geofence region. For example, when the GPS components (positioning system 218 and/or location system 224) indicate that the vehicle is within the geofence region, the geofence data process component 316 may further verify the accuracy of the location by utilizing Wireless Local Area Networks (WLAN) access point information sources, Bluetooth information sources, radio-frequency identification (RFID) sources, and/or the like. At (4), the vehicle 110 may transmit the verification of the vehicle location information to the vehicle data service 122.

At (5), the third party service providers 130 and/or technicians may request authentication of the third party service providers 130 and/or computing devices 140 (e.g., technician's device to access the vehicle data) to access to the vehicle. Illustratively, a technician and/or a third party service provider will have authentication credentials that are provided to the network service provider and, in turn, can receive a token or other semi-persistent information indicating the technician's authentication to access the vehicle 110. In one example, an authenticated third party service providers 130 and/or computing device 140 does not have access rights to any individual vehicle until the authenticated third party service providers 130 and/or technician (by utilizing the computing device 140) is authorized, as illustrated below. To request authorization, the third party service providers 130 and/or technician (by utilizing the computing device 140) submit an access request from the network service, providing specified information. By way of illustration, in one embodiment, the technician can submit vehicle identifier information, such as VIN, customer contact information or identifiers, such as customer email address, telephones, etc., and other security or access information. Additionally, the technician can also provide additional information regarding access, such as reasons for access, time of access, the extent of access, and the like. The transmission of the request can be facilitated through an API or other interface. In some embodiments, the access request can be pre-populated with profile information that defines default information, such as access duration or specified limitations to data access rights (e.g., vehicle logs pertaining to specific components or excluding other components).

At (6), the vehicle data service 122 receives the request and validates that third party service providers 130 and/or technicians (by utilizing the computing device 140) token to ensure that the authentication rights permit access to the requested vehicle and vehicle data access type. For example, the vehicle data service 122 can verify that the third party service providers 130 and/or technician (by utilizing the computing device 140) have a valid subscription and that the subscription/qualifications of the technicians. For example, the vehicle data service 122 can verify that the requesting technician has sufficient credentials to provide the requested service to the vehicle. In another example, the vehicle data service 122 can also determine whether the requested service/access by the technician corresponds to a type of service that should be performed on the vehicle and whether the requested service is not duplicative or redundant. In still a further example, the vehicle data service 122 can also determine whether the requested service is characteristic of a pattern of behavior for the identified technician (e.g., service associated with different vehicles) that can be characterized as appropriate, potentially harmful, requiring verification from the customer or the like. The vehicle data service 122 can also verify aspects of the requested vehicle, the devices utilized by the technician, and the like.

At (7), the vehicle data service 122 can transmit a notification or command to the vehicle indicating that data access communications have been approved. The vehicle data service 122 can also provide notification or credentials to the third party service providers 130 and/or technician (by utilizing the computing device 140) that allow access to the vehicle data. The notifications may be provided via various communication channels, including email, short message service, mobile application, in-vehicle, and the like. In some embodiments, the data access authorizations may also be associated with additional authorization parameters including, but not limited to, duration of access, types of data accessed, revoking criteria (e.g., criteria that will result in an automatic revoking of rights), Customer notification parameters, and the like. In some embodiments, the vehicle data service 122 can be configured with a customer profile that may specify default values for the authorization parameters. In other examples, the customer may be prompted to provide additional data access parameters.

At (8), once the vehicle and third party service providers 130 and/or technician (by utilizing the computing device 140) receive a notification that the customer has approved, the vehicle 110 and the third party service providers 130 and/or technician can exchange the vehicle data. The vehicle data may be selected according to any number of communication methods and protocols. For example, the vehicle establishes a communication channel via short range wireless frequency transmissions based on geographic criteria proximate to a designated service provider. In other embodiments, the vehicle can encrypt, compress or otherwise process the transmissions between the service provider and the vehicle.

As described previously, vehicle data or communications access is set up as a set of common interfaces that do not require custom computing devices or hardware for the technicians. In one aspect, the interfaces can correspond to vehicle network information that provides access to the values/status of sensors or components or data collected from the sensors/components of the vehicles. As described above, the sensors can include hardware and software components that can obtain, generate or process a variety of operational or environment information sources that are configured in the vehicle for various purposes. In some embodiments, the sensors can provide raw, collected data to the control component as well as other controls for different functionality. By way of illustration, the information provided to control components by the sensors, controller components, or other processing units can be associated with the operation of the vehicle, such as detected vehicle speed, external temperature measurements, and operational status of the windshield wiper, vision system (e.g., camera inputs), location systems (e.g., GPS systems), timing information, the operational status of the components, etc. In some embodiments, the authenticated third party service providers 130 and/or technician (by utilizing the computing device 140) may perform the vehicle diagnostic by accessing the vehicle data, and the vehicle diagnostic result can be stored in the data store 124.

In some embodiments, the network 160 can be utilized as a backup network of the network 150. For example, when a technician accesses one of the vehicles 110 via the network 150 and the connection the network 150 is disrupted or severed, the vehicle 110 and the computing devices 140 can communicate via the network 160.

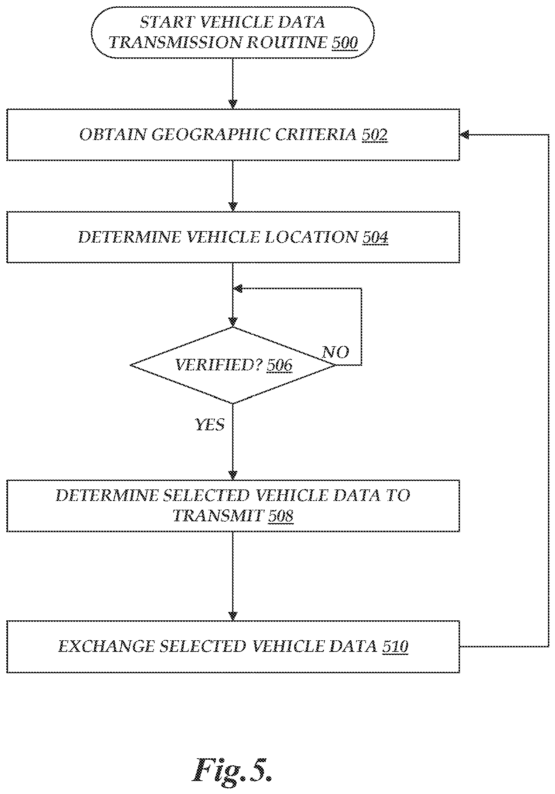

Turning now to FIG. 5, a routine 500 for a vehicle data transmission will be described. Routine 500 is illustratively implemented by the processing component 120 implemented in the vehicle 110. The processes illustrated in FIG. 5A are illustrative in nature and should not be construed as limiting.

At block 502, the vehicle receives geographic criteria transmitted from the network service provider. Illustratively, the network service can transmit the geographic criteria to the vehicle based on a request from a user associated with the vehicle, such as placing a service request with a third party or transmitting the request directly to the network service. In other embodiments, the third party service may prompt the network service to transmit geographic criteria to the vehicle, such as upon confirmation of a service appointment with the vehicle. In other embodiments, the network service provider can transmit geographic criteria for a plurality of third parties independent of a request or scheduled service. Additionally, a vehicle may be provided geographic criteria such as upon detection of entering into a geographic region (e.g., city limits or regional limits).

Illustratively, the geographic criteria can be in the form computer-executable data, such as executable scripts, that at least a trigger based on geographic boundary information. The trigger can be based on a determination that a vehicle's location falls within the defined geographic boundary information (e.g., entering into a geofence) or a vehicle's location no longer falls within the defined geographic boundary information (e.g., leaving a geofence). The geographic criteria can illustratively include a specification of one or more specific vehicle data information or types of vehicle data that should be transmitted by on satisfaction of the triggering action. Still, the geographic criteria can include additional or supplemental criteria that can define filtering criteria for the vehicle data, timing data for the transmission of the vehicle data, and the like. The geographic criteria can further incorporate or be supplemented with user profile information that may specify additional parameters related to vehicle data transmissions, such as data formatting preferences, customization information, prohibited information, and the like.

At block 504, the vehicle can determine the vehicle location information by accessing location information utilizing local location based service components, such as GPS components that are part of the vehicle, or otherwise accessing location services, such as via a mobile device (e.g., positioning system 218 and/or location system 224).

At block 506, the vehicle verifies the vehicle location information to the geographic criteria. For example, a processing component 220 within the vehicle may process the geographic criteria to determine whether a current location matches one or more the geographic criteria. As discussed above, this can include a determination of whether the determined location falls within a geofence or no longer falls within a geofence. The matching of the geofencing information illustratively can be characterized as satisfying a triggering action. In some embodiments, the vehicle may verify the vehicle's location within the geofence region. For example, when the GPS components (positioning system 218 and/or location system 224) indicate that the vehicle is within the geofence region, the geofence data process component 316 may further verify the accuracy of the location by utilizing Wireless Local Area Networks (WLAN) access point information sources, Bluetooth information sources, radio-frequency identification (RFID) sources, and/or the like. If the vehicle verifies that the vehicle is located within the geofence region by processing the geographic criteria, the routing can move to the block 508. If the vehicle does not verify that the vehicle is located within the geofence region by processing the geographic criteria, the routing can move to the block 502.

At block 508, if the processed location information indicates a triggering action has occurred, the vehicle 110 can then select the vehicle data that will be transmitted to the third party service. As described above, the geographic criteria can, in some embodiments, specify the particular data or data types that will be transmitted to the third party. For example, the selected data can correspond to the service type, user preference, service provider preferences and the like. For example, the vehicle data can include software versioning information, diagnostic logs, sensor values, user information, language preferences, and the like.

In still further embodiments, the triggering actions can further include a request for information to be provided by the third party, such as software updates, specific codes or encryption keys utilized by the third party, and the like. Accordingly, the transmission of vehicle data in some embodiments can include transmission of data from the vehicle to the third party, the transmission of data from the third party to the vehicle, or a combination thereof.

At block 510, the vehicle 110 and third party service provider exchange the selected data. The transmission of data may be selected according to any number of communication methods and protocols. For example, the vehicle establishes a communication channel via short range wireless frequency transmissions based on geographic criteria proximate to a designated service provider. In other embodiments, the vehicle can encrypt, compress, or otherwise process the transmissions between the service provider and the vehicle.

In some embodiments, the vehicle 110 exchanges the vehicle data with authorized third party service providers. In these embodiments, the vehicle data service 122 may include lists of authorized technicians and/or technicians in the authorized third party service providers associated with one or more geofence regions. For example, all of technicians in the third party service provider A are associated with the geofence region of the third party service provider A. In this example, when a vehicle enters the geofence region of the third party service provider A, the authorized technicians associated with the third party service provider A are authorized to access the vehicle data. In some embodiments, the vehicle data service 122 provides one or more criteria to authorize the technicians and terminate the authentication of the technicians. For example, the criteria can be based on the physical location of the technicians. In this example, when a vehicle enters into the geofence area associated with the third party service provider A, only technicians located in a specific area, such as the service facility of the third party service provider A can have access to the vehicle data. In another example, when technicians in the third party service provider A leave the third party service provider A facility (e.g., leave the geofence region associated with third party service provider A's facility), the technicians' authentication is terminated. The criteria can be further based on types of services, such that only technicians who are specialized in the requested services from the vehicle owner (e.g., user) can be authenticated. These criteria are provided merely for exemplify purposes, and the present disclosure does not limit the types or numbers of the criteria.

In some embodiments, the network 160 can be utilized as a backup network of the network 150. For example, when a technician accesses one of the vehicles 110 via the network 150 and that the connection of the network 150 is disrupted or severed, the vehicles 110 and the computing devices 140 can communicate via the network 160.

After ending the block 510, The routine 500 can be configured to be an automated routine by returning to the block 502. Illustratively, the third party service provider can be configured to automate the processing of transmitted vehicle data or to implement a defined workflow related to transmitted vehicle data. This can include generating interfaces on output devices in the designated service center (e.g., welcoming a user), interfacing with scheduling and ordering systems, generating notifications, generating documents, and the like.

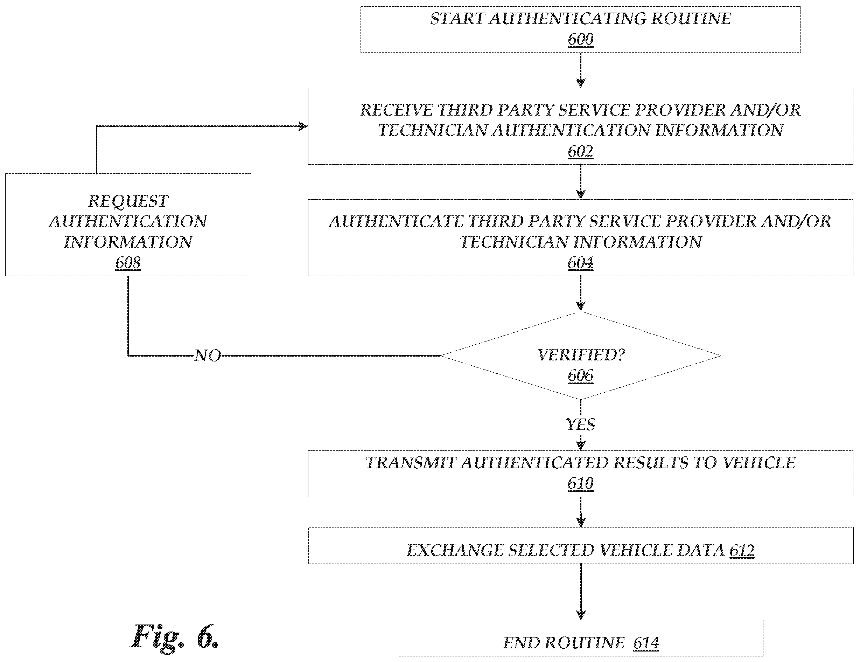

Turning now to FIG. 6, a routine 600 for authenticating the third party service providers 130 and/or technicians will be described. Routine 600 is illustratively implemented by the vehicle data service 122.

At block 602, the third party service providers 130 and/or technicians may request authentication of the third party service providers 130 and/or computing devices 140 (e.g., technician's device to access to the vehicle data) to access the vehicle. Illustratively, a technician and/or a third party service provider will have authentication credentials that are provided to the network service provider and, in turn, can receive a token or other semi-persistent information that indicates authentication of the technician to access the vehicle 110. In one example, an authenticated third party service providers 130 and/or computing devices 140 does not have access rights to any individual vehicle until the authenticated third party service providers 130 and/or technician (by utilizing the computing device 140) is authorized, as illustrated below. To request authorization, the third party service providers 130 and/or technician (by utilizing the computing device 140) submit an access request from the network service, providing specified information. By way of illustration, in one embodiment, the technician can submit vehicle identifier information, such as VIN, customer contact information or identifiers, such as customer email address, telephones, etc., and other security or access information. Additionally, the technician can also provide additional information regarding access, such as reasons for access, time of access, the extent of access, and the like. The transmission of the request can be facilitated through an API or other interface. In some embodiments, the access request can be pre-populated with profile information that defines default information, such as access duration or specified limitations to data access rights (e.g., vehicle logs pertaining to specific components or excluding other components).

At block 604, the vehicle data service 122 receives the request and validates that third party service providers 130 and/or technicians (by utilizing the computing device 140) token to ensure that the authentication rights permit access to the requested vehicle and vehicle data access type. For example, the vehicle data service 122 can verify that the third party service providers 130 and/or technician (by utilizing the computing device 140) have a valid subscription and that the subscription/qualifications of the technicians. For example, the vehicle data service 122 can verify that the requesting technician has sufficient credentials to provide the requested service to the vehicle. In another example, the vehicle data service 122 can also determine whether the requested service/access by the technician corresponds to a type of service that should be performed on the vehicle and whether the requested service is not duplicative or redundant. In still a further example, the vehicle data service 122 can also determine whether the requested service is characteristic of a pattern of behavior for the identified technician (e.g., service associated with different vehicles) that can be characterized as appropriate, potentially harmful, requiring verification from the customer or the like. The vehicle data service 122 can also verify aspects of the requested vehicle, the devices utilized by the technician, and the like. At block 606, if the third party service providers 130 and/or technicians' authentication information is verified, the vehicle data service 122 may transmit the authenticated results to the vehicle at block 610. If the third party service providers 130 and/or technicians' authentication information is not verified, the vehicle data service 122 may request the third party service providers 130 and/or technicians' authentication information at block 608.

At block 610, the vehicle data service 122 can transmit a notification or command to the vehicle indicating that data access communications have been approved. The vehicle data service 122 can also provide notification or credentials to the third party service providers 130 and/or technician (by utilizing the computing device 140) that allow access to the vehicle data. The notifications may be provided via various communication channels, including email, short message service, mobile application, in-vehicle, and the like. In some embodiments, the data access authorizations may also be associated with additional authorization parameters including, but not limited to, duration of access, types of data accessed, revoking criteria (e.g., criteria that will result in an automatic revoking of rights), Customer notification parameters, and the like. In some embodiments, the vehicle data service 122 can be configured with a customer profile that may specify default values for the authorization parameters. In other examples, the customer may be prompted to provide additional data access parameters.

At block 612, once the vehicle and third party service providers 130 and/or technician (by utilizing the computing device 140) receive a notification that the customer has approved, the vehicle 110 and the third party service providers 130 and/or technician can exchange the vehicle data. The vehicle data may be selected according to any number of communication methods and protocols. For example, the vehicle establish a communication channel via short range wireless frequency transmissions based on geographic criteria proximate to a designated third party service provider. In other embodiments, the vehicle can encrypt, compression or otherwise process the transmissions between the service provider and the vehicle. At block 614, routine 600 can be ended.

Various embodiments of the present disclosure may be a system, a method, and/or a computer program product at any possible technical detail level of integration. The computer program product may include a computer readable storage medium (or mediums) having computer readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer readable storage medium (or mediums).

The computer readable storage medium can be a tangible device that can retain and store data and/or instructions for use by an instruction execution device. The computer readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device.

Computer readable program instructions (as also referred to herein as, for example, "code," "instructions," "module," "application," "software application," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Java, C++, or the like, and procedural programming languages, such as the "C" programming language or similar programming languages. Computer readable program instructions may be callable from other instructions or from itself, and/or may be invoked in response to detected actions or interrupts. Computer readable program instructions configured for execution on computing devices may be provided on a computer readable storage medium, and/or as a digital download (and may be originally stored in a compressed or installable format that requires installation, decompression or decryption prior to execution) that may then be stored on a computer readable storage medium. Such computer readable program instructions may be stored, partially or fully, on a memory device (e.g., a computer readable storage medium) of the executing computing device, for execution by the computing device. The computer readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart(s) and/or block diagram(s) block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, etc. with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above-embodiments may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows Server, etc.), Windows CE, Unix, Linux, SunOS, Solaris, Blackberry OS, VxWorks, or other suitable operating systems. In other embodiments, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

As described above, in various embodiments certain functionality may be accessible by a user through a web-based viewer (such as a web browser), or other suitable software program. In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain embodiments, one or more of the computing devices and/or systems of the disclosure may include mobile computing devices, and user interfaces may be accessible through such mobile computing devices (for example, smartphones and/or tablets).

Many variations and modifications may be made to the above-described embodiments, the elements of which are to be understood as being among other acceptable examples. All such modifications and variations are intended to be included herein within the scope of the invention insofar encompassed within the scope of the appended claims. The foregoing description details certain embodiments. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain embodiments include, while other embodiments may not include, certain features, elements, and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Conjunctive language such as the phrase "at least one of X, Y, and Z," or "at least one of X, Y, or Z," unless specifically stated otherwise, is to be understood with the context as used in general to convey that an item, term, etc. may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain embodiments require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one,'' "one or more," or "a plurality" elsewhere in the claims or specification.

The term "comprising" as used herein should be given an inclusive rather than exclusive interpretation. For example, a general purpose computer comprising one or more processors should not be interpreted as excluding other computer components, and may possibly include such components as memory, input/output devices, and/or network interfaces, among others.

## Claims

1. A system for providing vehicle data access to a third party service provider (130) based on a vehicle location, the system comprising one or more external computing devices associated with a processor and a memory (310, 350) for executing computer-executable instructions to implement a processing component (120, 220, 220m), wherein the processing component (120, 220, 220m) is configured to:
obtain, from a vehicle data service (122), a geographic criteria corresponding to vehicle service requests from a user, wherein the geographic criteria specify selected vehicle data to be exchanged with a third party service provider in response to the vehicle service requests and geographic boundary information, wherein the geographic boundary information indicates a geofence region associated with the third party service provider;
determine a vehicle location information by accessing to a vehicle location based service component;
verify the determined vehicle location information to the geographic criteria;
authorize the third party service provider (130) to access to at least part of the vehicle data upon the verification;
detect one or more triggering actions, wherein the triggering actions include a request for vehicle data to be provided to the third party service provider (130), and wherein the third party service provider (130) is configured to provide a vehicle service in response to the vehicle service requests and based on the authorized access to at least part of the vehicle data;
determine the selected vehicle data to exchange with the third party service provider (130) based on the obtained geographic criteria; and
cause exchange of the selected vehicle data between the vehicle (110) and the authorized third party service provider (130).

2. The system as recited in Claim 1, wherein the verification includes any one of:
matching the vehicle location information with the geographic criteriaor matching the vehicle location information with the geographic criteria based on a vehicle GPS positioning system and at least one of Wireless Local Area Networks, WLAN, access point information sources, Bluetooth information sources, and radio-frequency identification, RFID, sources.

3. The system as recited in Claim 1, wherein the vehicle location information is generated at least based on a vehicle GPS positioning system.

4. The system as recited in Claim 1, wherein the third party service provider (130) includes one or more technicians associated with the third party service provider.

5. The system as recited in Claim 1, wherein the third party service provider (130) is configured to access to the vehicle data based on criteria.

6. The system as recited in Claim 5, wherein the third party service provider (130) is limited to access to the vehicle data by revoking the criteria, wherein the revoking the criteria includes revoking actions that results an automating revoking right to access to the vehicle data, and wherein the revoking actions are based at least on time and/or location of the third party service provider (130).

7. The system as recited in Claim 1, wherein the vehicle data service (122) is configured to authenticate the third party service provider (130), wherein the authentication is comprising:
obtaining a third party service provider's (130) authentication information;
verifying the third party service provider's (130) authentication information; and
in response to verifying the third party service provider's (130) authentication information, providing an authentication result to the vehicle (110), wherein the authentication result indicates that the third party service provider (130) is authenticated to access at least part of the vehicle data.

8. The system as recited in claim 1,
wherein the detection of the triggering actions is based on verifying location information of a vehicle associated with the vehicle data within the geographic criteria.

9. The system as recited in Claim 8, wherein the processing component (120, 220, 220m) is further configured to:
obtain, from a vehicle data service (122), geographic criteria corresponding to vehicle service requests from a user; and
determine a vehicle location information by accessing to a vehicle location bases service component.

10. The system as recited in Claim 8, wherein the location information of the vehicle (110) is generated at least based on a vehicle GPS positioning system implemented into the vehicle (110), and wherein the verification includes matching the location information of the vehicle (110) with the geographic criteria based on a vehicle GPS positioning system and at least one of Wireless Local Area Networks, WLAN, access point information sources, Bluetooth information sources, and radio-frequency identification, RFID, sources.

11. The system as recited in Claim 8, wherein the third party service provider (130) is authorized to access to at least part of the vehicle data upon the verification, and wherein the vehicle data service (122) is configured to authenticate the third party service provider (130), wherein the authentication is comprising:
obtaining a third party service provider's (130) authentication information;
verifying the third party service provider's (130) authentication information; and
in response to verifying the third party service provider's (130) authentication information, providing an authentication result to the vehicle (110), wherein the authentication result indicates that the third party service provider (130) is authenticated to access at least part of the vehicle data.

12. A computer-implemented method for providing vehicle data access to a third party service provider (130) based on a vehicle location, the method comprising:
obtaining, from a vehicle data service (122), geographic criteria corresponding to vehicle service requests from a user, wherein the geographic criteria specify a specification of specific vehicle data information to be exchanged with a third party service provider in response to the vehicle service requests and geographic boundary information, wherein the geographic boundary information indicates a geofence region associated with the third party service provider;
determining a vehicle location information by accessing to a vehicle location bases service component, wherein the vehicle location information is generated at least based on a vehicle GPS positioning system;
verifying the vehicle location information to the geographic criteria;
authorizing the third party service provider to access to at least part of the vehicle data upon the verifying;
detecting one or more triggering actions, wherein the triggering actions include
a request to access the selected vehicle data to be provided to the third party service provider (130), and wherein the triggering actions further include a request for information to be provided by the third party service provider, and wherein the third party service provider (130) configured to provide a vehicle service in response to the vehicle service requests and based on the authorized access to at least part of the vehicle data;
determining the selected vehicle data from vehicle data to exchange with the third party service provider (130) based on the obtained geographic criteria, the selected vehicle data corresponding to vehicle service requests; and
causing exchange of the selected vehicle data between the vehicle (110) and the third party service provider (130).

13. The computer-implemented method of Claim 12, wherein the verification includes any one of:
matching the vehicle location information with the geographic criteria, wherein the geographic criteria includes geographic boundary information, and wherein the geographic boundary information indicates a geofence region associated with the third party service provider (130) or
matching the vehicle location information with the geographic criteria based on a vehicle GPS positioning system and at least one of Wireless Local Area Networks, WLAN, access point information sources, Bluetooth information sources, and radio-frequency identification, RFID, sources.

14. The computer-implemented method of Claim 12, wherein the third party service provider (130) is authorized to access to at least part of the vehicle data upon the verification, wherein the third party service provider (130) islimited to access to the vehicle data by revoking criteria, wherein the revoking criteria includes revoking actions that results an automating revoking right to access to the vehicle data, and wherein the revoking actions are based at least on time and/or location of the one or more of the technicians.

15. The computer-implemented method of Claim 12, wherein the vehicle data service (122) is configured to authenticate the third party service provider (130), wherein the authentication is comprising:
obtaining a third party service provider's (130) authentication information;
verifying the third party service provider's (130) authentication information; and
in response to verifying the third party service provider's (130) authentication information, providing an authentication result to the vehicle (110), wherein the authentication result indicates that the third party service provider (130) is authenticated to access at least part of the vehicle data.

## Patentansprüche

1. System zum Bereitstellen des Zugriffs auf Fahrzeugdaten für einen Drittdienstanbieter (130) basierend auf einem Fahrzeugstandort, wobei das System eine oder mehrere externe Rechenvorrichtungen aufweist, die einem Prozessor und einem Speicher (310, 350) zum Ausführen von computerausführbaren Anweisungen zugeordnet sind, um eine Verarbeitungskomponente (120, 220, 220m) zu implementieren, wobei die Verarbeitungskomponente (120, 220, 220m) für Folgendes konfiguriert ist:
Erhalten von geografischen Kriterien, die Fahrzeugdienstanforderungen von einem Benutzer entsprechen, von einem Fahrzeugdatendienst (122), wobei die geografischen Kriterien ausgewählte Fahrzeugdaten spezifizieren, die als Reaktion auf die Fahrzeugdienstanforderungen und geografische Grenzinformationen mit einem Drittdienstanbieter ausgetauscht werden sollen, wobei die geografischen Grenzinformationen einen Geofence-Bereich angeben, der dem Drittdienstanbieter zugeordnet ist;
Bestimmen von Fahrzeugstandortinformationen durch Zugreifen auf eine Dienstkomponente auf Basis des Fahrzeugstandorts;
Überprüfen der bestimmten Fahrzeugstandortinformationen bezüglich der geografischen Kriterien;
Autorisieren des Drittdienstanbieters (130), um nach der Überprüfung auf mindestens einen Teil der Fahrzeugdaten zuzugreifen;
Detektieren einer oder mehrerer auslösender Aktionen, wobei die auslösenden Aktionen eine Anforderung zum Bereitstellen von Fahrzeugdaten an den Drittdienstanbieter (130) enthalten, und wobei der Drittdienstanbieter (130) dazu konfiguriert ist, als Reaktion auf die Fahrzeugdienstanforderungen und basierend auf den autorisierten Zugriff auf mindestens einen Teil der Fahrzeugdaten einen Fahrzeugdienst bereitzustellen;
Bestimmen der ausgewählten Fahrzeugdaten, die mit dem Drittdienstanbieter (130) ausgetauscht werden sollen, basierend auf den erhaltenen geografischen Kriterien; und Veranlassen des Austauschs der ausgewählten Fahrzeugdaten zwischen dem Fahrzeug (110) und dem autorisierten Drittdienstanbieter (130).

2. System nach Anspruch 1, wobei die Überprüfung eines von Folgendem umfasst:
Abgleichen der Fahrzeugstandortinformationen mit den geografischen Kriterien oder
Abgleichen der Fahrzeugstandortinformationen mit den geografischen Kriterien basierend auf einem Fahrzeug-GPS-Positionierungssystem und mindestens einem von Wireless Local Area Network, WLAN,-Zugangspunkt-Informationsquellen, Bluetooth-Informationsquellen und Hochfrequenz-Identifikations, RFID,-Quellen.

3. System nach Anspruch 1, wobei die Fahrzeugstandortinformationen mindestens basierend auf dem Fahrzeug-GPS-Positionierungssystem erzeugt werden.

4. System nach Anspruch 1, wobei der Drittdienstanbieter (130) einen oder mehrere Techniker enthält, die dem Drittdienstanbieter zugeordnet sind.

5. System nach Anspruch 1, wobei der Drittdienstanbieter (130) dazu konfiguriert ist, basierend auf Kriterien auf die Fahrzeugdaten zuzugreifen.

6. System nach Anspruch 5, wobei der Drittdienstanbieter (130) durch das Entziehen der Kriterien eingeschränkt ist, um auf die Fahrzeugdaten zuzugreifen, wobei das Entziehen der Kriterien Entziehungsaktionen umfasst, die zu einem automatischen Entziehen des Zugriffsrechts auf die Fahrzeugdaten führen, und wobei die Entziehungsaktionen mindestens auf der Zeit und/oder dem Standort des Drittdienstanbieters (130) basieren.

7. System nach Anspruch 1, wobei der Fahrzeugdatendienst (122) dazu konfiguriert ist, den Drittdienstanbieter (130) zu authentifizieren, wobei die Authentifizierung Folgendes umfasst:
Erhalten von Authentifizierungsinformationen eines Drittdienstanbieters (130); Überprüfen der Authentifizierungsinformationen des Drittdienstanbieters (130); und
als Reaktion auf das Überprüfen der Authentifizierungsinformationen des Drittdienstanbieters (130), Bereitstellen eines Authentifizierungsergebnisses an das Fahrzeug (110), wobei das Authentifizierungsergebnis angibt, dass der Drittdienstanbieter (130) authentifiziert ist, um auf mindestens einen Teil der Fahrzeugdaten zuzugreifen.

8. System nach Anspruch 1,
wobei die Detektion der auslösenden Aktionen auf dem Überprüfen von Standortinformationen eines Fahrzeugs basiert, die den Fahrzeugdaten innerhalb der geografischen Kriterien zugeordnet sind.

9. System nach Anspruch 8, wobei die Verarbeitungskomponente (120, 220, 220m) ferner für Folgendes konfiguriert ist:
Erhalten von geografischen Kriterien, die Fahrzeugdienstanforderungen von einem Benutzer entsprechen, von einem Fahrzeugdatendienst (122); und
Bestimmen von Fahrzeugstandortinformationen durch Zugreifen auf eine Dienstkomponente auf Basis des Fahrzeugstandorts.

10. System nach Anspruch 8, wobei die Standortinformationen des Fahrzeugs (110) mindestens basierend auf einem Fahrzeug-GPS-Positionierungssystem, das in das Fahrzeug (110) implementiert ist, erzeugt werden, und wobei die Überprüfung das Abgleichen der Fahrzeugstandortinformationen des Fahrzeugs (110) mit den geografischen Kriterien basierend auf einem Fahrzeug-GPS-Positionierungssystem und mindestens einem von Wireless Local Area Network, WLAN, -Zugangspunkt-Informationsquellen, Bluetooth-Informationsquellen und Hochfrequenz-Identifikations, RFID,-Quellen umfasst.

11. System nach Anspruch 8, wobei der Drittdienstanbieter (130) autorisiert ist, um nach der Überprüfung auf mindestens einen Teil der Fahrzeugdaten zuzugreifen, und wobei der Fahrzeugdatendienst (122) dazu konfiguriert ist, den Drittdienstanbieter (130) zu authentifizieren, wobei die Authentifizierung Folgendes umfasst:
Erhalten von Authentifizierungsinformationen eines Drittdienstanbieters (130);
Überprüfen der Authentifizierungsinformationen des Drittdienstanbieters (130); und
als Reaktion auf das Überprüfen der Authentifizierungsinformationen des Drittdienstanbieters (130), Bereitstellen eines Authentifizierungsergebnisses an das Fahrzeug (110), wobei das Authentifizierungsergebnis angibt, dass der Drittdienstanbieter (130) authentifiziert ist, um auf mindestens einen Teil der Fahrzeugdaten zuzugreifen.

12. Computerimplementiertes Verfahren zum Bereitstellen des Zugriffs auf Fahrzeugdaten für einen Drittdienstanbieter (130) basierend auf einem Fahrzeugstandort, wobei das Verfahren Folgendes umfasst:
Erhalten von geografischen Kriterien, die Fahrzeugdienstanforderungen von einem Benutzer entsprechen, von einem Fahrzeugdatendienst (122), wobei die geografischen Kriterien eine Spezifikation spezifischer Fahrzeugdateninformationen spezifizieren, die als Reaktion auf die Fahrzeugdienstanforderungen und geografischen Grenzinformationen mit einem Drittdienstanbieter ausgetauscht werden sollen, wobei die geografischen Grenzinformationen einen Geofence-Bereich angeben, der dem Drittdienstanbieter zugeordnet ist;
Bestimmen von Fahrzeugstandortinformationen durch Zugreifen auf eine Dienstkomponente auf Basis des Fahrzeugstandorts, wobei die Fahrzeugstandortinformationen mindestens basierend auf einem Fahrzeug-GPS-Positionierungssystem erzeugt werden;
Überprüfen der Fahrzeugstandortinformationen bezüglich der geografischen Kriterien;
Autorisieren des Drittdienstanbieters, um nach der Überprüfung auf mindestens einen Teil der Fahrzeugdaten zuzugreifen;
Detektieren einer oder mehrerer auslösender Aktionen, wobei die auslösenden Aktionen eine Anforderung zum Zugreifen auf die an den Drittdienstanbieter (130) bereitzustellenden Fahrzeugdaten enthalten, und wobei die auslösenden Aktionen weiter eine Anforderung zum Bereitstellen von Informationen an den Drittdienstanbieter (130) enthalten, und wobei der Drittdienstanbieter (130) dazu konfiguriert ist, als Reaktion auf die Fahrzeugdienstanforderungen und basierend auf dem autorisierten Zugriff auf mindestens einen Teil der Fahrzeugdaten einen Fahrzeugdienst bereitzustellen;
Bestimmen der ausgewählten Fahrzeugdaten anhand von Fahrzeugdaten, die mit dem Drittdienstanbieter (130) ausgetauscht werden sollen, basierend auf den erhaltenen geografischen Kriterien, wobei die ausgewählten Fahrzeugdaten den Fahrzeugdienstanforderungen entsprechen; und
Veranlassen des Austauschs der ausgewählten Fahrzeugdaten zwischen dem Fahrzeug (110) und dem Drittdienstanbieter (130).

13. Computerimplementiertes Verfahren nach Anspruch 12, wobei die Überprüfung eines von Folgendem umfasst:
Abgleichen der Fahrzeugstandortinformationen mit den geografischen Kriterien, wobei die geografischen Kriterien geografische Grenzinformationen enthalten, und wobei die geografischen Grenzinformationen einen Geofence-Bereich angeben, der dem Drittdienstanbieter (130) zugeordnet ist, oder
Abgleichen der Fahrzeugstandortinformationen mit den geografischen Kriterien basierend auf einem Fahrzeug-GPS-Positionierungssystem und mindestens einem von Wireless Local Area Network, WLAN,-Zugangspunkt-Informationsquellen, Bluetooth-Informationsquellen und Hochfrequenz-Identifikations, RFID,-Quellen.

14. Computerimplementiertes Verfahren nach Anspruch 12, wobei der Drittdienstanbieter (130) autorisiert ist, um nach der Überprüfung auf mindestens einen Teil der Fahrzeugdaten zuzugreifen, wobei der Drittdienstanbieter (130) durch das Entziehen der Kriterien eingeschränkt ist, um auf die Fahrzeugdaten zuzugreifen, wobei das Entziehen der Kriterien Entziehungsaktionen umfasst, die zu einem automatischen Entziehen des Zugriffsrechts auf die Fahrzeugdaten führen, und wobei die Entziehungsaktionen mindestens auf der Zeit und/oder dem Standort eines oder mehrerer Techniker basieren.

15. Computerimplementiertes Verfahren nach Anspruch 12, wobei der Fahrzeugdatendienst (122) dazu konfiguriert ist, den Drittdienstanbieter (130) zu authentifizieren, wobei die Authentifizierung Folgendes umfasst:
Erhalten von Authentifizierungsinformationen eines Drittdienstanbieters (130);
Überprüfen der Authentifizierungsinformationen des Drittdienstanbieters (130); und
als Reaktion auf das Überprüfen der Authentifizierungsinformationen des Drittdienstanbieters (130), Bereitstellen eines Authentifizierungsergebnisses an das Fahrzeug (110), wobei das Authentifizierungsergebnis angibt, dass der Drittdienstanbieter (130) authentifiziert ist, um auf mindestens einen Teil der Fahrzeugdaten zuzugreifen.

## Revendications

1. Système pour fournir un accès aux données de véhicule à un fournisseur de services tiers (130) basé sur une localisation du véhicule, le système comprenant un ou plusieurs dispositifs informatiques externes associés à un processeur et une mémoire (310, 350) pour exécuter des instructions exécutables par ordinateur afin de mettre en œuvre un composant de traitement (120, 220, 220m), lequel composant de traitement (120, 220, 220m) est configuré pour :
obtenir, à partir d'un service de données de véhicule (122), un critère géographique correspondant à des demandes de service de véhicule d'un utilisateur, lequel critère géographique spécifie des données de véhicule sélectionnées à échanger avec un fournisseur de services tiers en réponse aux demandes de service de véhicule et une information de limite géographique, laquelle information de limite géographique indique une région de géorepérage associée au fournisseur de services tiers ;
déterminer une information de localisation du véhicule en accédant à un composant de service basé sur la localisation du véhicule ;
vérifier l'information de localisation du véhicule déterminée par rapport au critère géographique ;
autoriser le fournisseur de services tiers (130) à accéder à au moins une partie des données de véhicule lors de la vérification ;
détecter une ou plusieurs actions de déclenchement, lesquelles actions de déclenchement comprennent une demande pour que des données de véhicule soient fournies au fournisseur de services tiers (130), et lequel fournisseur de services tiers (130) est configuré pour fournir un service de véhicule en réponse aux demandes de service de véhicule et sur la base de l'accès autorisé à au moins une partie des données de véhicule ;
déterminer les données de véhicule sélectionnées à échanger avec le fournisseur de services tiers (130) sur la base du critère géographique obtenu ; et
provoquer l'échange des données de véhicule sélectionnées entre le véhicule (110) et le fournisseur de services tiers autorisé (130).

2. Système selon la revendication 1, dans lequel la vérification comprend l'une quelconque des opérations suivantes :
appariement de l'information de localisation du véhicule avec le critère géographique ou
appariement de l'information de localisation du véhicule avec le critère géographique sur la base d'un système de positionnement GPS du véhicule et d'au moins un des éléments suivants : réseau local sans fil (WLAN), sources d'information de point d'accès, sources d'information Bluetooth, et sources d'identification par radiofréquence (RFID).

3. Système selon la revendication 1, dans lequel l'information de localisation du véhicule est générée au moins sur la base d'un système de positionnement GPS du véhicule.

4. Système selon la revendication 1, dans lequel le fournisseur de services tiers (130) comprend 2 nou plusieurs techniciens associés au fournisseur de services tiers.

5. Système selon la revendication 1, dans lequel le fournisseur de services tiers (130) est configuré pour accéder aux données de véhicule sur la base de critères.

6. Système selon la revendication 5, dans lequel le fournisseur de services tiers (130) est limité à accéder aux données de véhicule par révocation des critères, laquelle révocation des critères comprend des actions de révocation qui entraînent une automatisation du droit de révocation d'accès aux données de véhicule, et dans lequel les actions de révocation sont basées au moins sur le temps et/ou l'emplacement du fournisseur de services tiers (130).

7. Système selon la revendication 1, dans lequel le service de données de véhicule (122) est configuré pour authentifier le fournisseur de services tiers (130), laquelle authentification comprend :
obtention d'une information d'authentification du fournisseur de services tiers (130) ; vérification de l'information d'authentification du fournisseur de services tiers (130) ;
et
en réponse à la vérification de l'information d'authentification du fournisseur de services tiers (130), fourniture d'un 2 esultaat d'authentification au véhicule (110), lequel 2 esultaat d'authentification indique que le fournisseur de services tiers (130) est authentifié pour accéder à au moins une partie des données de véhicule.

8. Système selon la revendication 1,
dans lequel la détection des actions de déclenchement est basée sur la vérification d'une information de localisation d'un véhicule associé aux données de véhicule dans le critère géographique.

9. Système selon la revendication 8, dans lequel le composant de traitement (120, 220, 220m) est en outre configuré pour :
obtenir, à partir d'un service de données de véhicule (122), des critères géographiques correspondant à des demandes de service de véhicule d'un utilisateur ; et
déterminer une information de localisation du véhicule en accédant à un composant de service basé sur la localisation du véhicule.

10. Système selon la revendication 8, dans lequel l'information de localisation du véhicule (110) est générée au moins sur la base d'un système de positionnement GPS du véhicule mis en œuvre dans le véhicule (110), et dans lequel la vérification comprend l'appariement de l'information de localisation du véhicule (110) avec le critère géographique sur la base d'un système de positionnement GPS du véhicule et d'au moins un des éléments suivants : réseau local sans fil (WLAN), sources d'information de point d'accès, sources d'information Bluetooth, et sources d'identification par radiofréquence (RFID).

11. Système selon la revendication 8, dans lequel le fournisseur de services tiers (130) est autorisé à accéder à au moins une partie des données de véhicule lors de la vérification, et dans lequel le service de données de véhicule (122) est configuré pour authentifier le fournisseur de services tiers (130), laquelle authentification comprend :
obtention d'une information d'authentification du fournisseur de services tiers (130) ;
vérification de l'information d'authentification du fournisseur de services tiers (130) ;
et
en réponse à la vérification de l'information d'authentification du fournisseur de services tiers (130), fourniture d'un 3 esultaat d'authentification au véhicule (110), lequel 3 esultaat d'authentification indique que le fournisseur de services tiers (130) est authentifié pour accéder à au moins une partie des données de véhicule.

12. Procédé mis en œuvre par ordinateur pour fournir un accès aux données de véhicule à un fournisseur de services tiers (130) basé sur une localisation du véhicule, le procédé comprenant :
obtention, à partir d'un service de données de véhicule (122), de critères géographiques correspondant à des demandes de service de véhicule d'un utilisateur, lesquels critères géographiques spécifient une spécification d'informations de données de véhicule spécifiques à échanger avec un fournisseur de services tiers en réponse aux demandes de service de véhicule et une information de limite géographique, laquelle information de limite géographique indique une région de géorepérage associée au fournisseur de services tiers
détermination d'une information de localisation du véhicule en accédant à un composant de service basé sur la localisation du véhicule, dans lequel l'information de localisation du véhicule est générée au moins sur la base d'un système de positionnement GPS du véhicule
vérification de l'information de localisation du véhicule par rapport aux critères géographiques ;
autorisation du fournisseur de services tiers à accéder à au moins une partie des données de véhicule lors de la vérification ;
détection d'une ou plusieurs actions de déclenchement, lesquelles actions de déclenchement comprennent une demande d'accès aux données de véhicule sélectionnées à fournir au fournisseur de services tiers (130), et dans lesquelles les actions de déclenchement comprennent en outre une demande d'information à fournir par le fournisseur de services tiers, et dans lequel le fournisseur de services tiers (130) est configuré pour fournir un service de véhicule en réponse aux demandes de service de véhicule et sur la base de l'accès autorisé à au moins une partie des données de véhicule ;
détermination des données de véhicule sélectionnées à partir des données de véhicule à échanger avec le fournisseur de services tiers (130) sur la base des critères géographiques obtenus, les données de véhicule sélectionnées correspondant aux demandes de service de véhicule ; et
provocation de l'échange des données de véhicule sélectionnées entre le véhicule (110) et le fournisseur de services tiers (130).

13. Procedé mis en œuvre par ordinateur selon la revendication 12, dans lequel la vérification comprend l'une quelconque des opérations suivantes :
appariement de l'information de localisation du véhicule avec les critères géographiques, dans lequel les critères géographiques comprennent une information de limite géographique, et dans lequel l'information de limite géographique indique une région de géorepérage associée au fournisseur de services tiers (130) ou
appariement de l'information de localisation du véhicule avec les critères géographiques sur la base d'un système de positionnement GPS du véhicule et d'au moins un des éléments suivants : réseau local sans fil (WLAN), sources d'information de point d'accès, sources d'information Bluetooth, et sources d'identification par radiofréquence (RFID).

14. Procedé mis en œuvre par ordinateur selon la revendication 12, dans lequel le fournisseur de services tiers (130) est autorisé à accéder à au moins une partie des données de véhicule lors de la vérification, dans lequel le fournisseur de services tiers (130) est limité à accéder aux données de véhicule par révocation de critères, laquelle révocation de critères comprend des actions de révocation qui entraînent une automatisation du droit de révocation d'accès aux données de véhicule, et dans lequel les actions de révocation sont basées au moins sur le temps et/ou l'emplacement d'un ou plusieurs techniciens.

15. Procédé mis en œuvre par ordinateur selon la revendication 12, dans lequel le service de données de véhicule (122) est configuré pour authentifier le fournisseur de services tiers (130), laquelle authentification comprend :
obtention d'une information d'authentification du fournisseur de services tiers (130) ;
vérification de l'information d'authentification du fournisseur de services tiers (130) ;
et
en réponse à la vérification de l'information d'authentification du fournisseur de services tiers (130), fourniture d'un résultat d'authentification au véhicule (110), lequel résultat d'authentification indique que le fournisseur de services tiers (130) est authentifié pour accéder à au moins une partie des données de véhicule.
